# EUROPÄISCHE PATENTSCHRIFT

(11) **EP 1 227 261 B1**
(45) Veröffentlichungstag und Bekanntmachung des Hinweises auf die Patenterteilung: **25.07.2007**
(21) Anmeldenummer: 02001300.9
(22) Anmeldetag: 18.01.2002
(51) Int. Cl.: F16D 65/12, F16D 65/847

(54) **Innenbelüftete Bremsscheibe**
Internally ventilated brake disc
Disque à ventilation intérieure

(30) Priorität: 27.01.2001 DE 10103639
(43) Veröffentlichungstag der Anmeldung: 31.07.2002
(73) Patentinhaber: AUDI AG, 85045 Ingolstadt (DE)
(72) Erfinder: Saame, Christoph, 85080 Gaimersheim (DE); Yazdirad, Kamjar, 85055 Ingolstadt (DE)
(74) Vertreter: le Vrang, Klaus

(56) Entgegenhaltungen:
- EP-A- 1 091 137
- DE-A- 2 950 787
- DE-A- 19 918 667
- DE-U- 1 922 803
- DE-U- 9 319 056

## Beschreibung

Die Erfindung betrifft eine innenbelüftete Bremsscheibe für Scheibenbremsen, insbesondere in Kraftfahrzeugen, gemäß dem Oberbegriff des Patentanspruches 1.

Eine derartige Bremsscheibe zeigt beispielsweise die DE 43 32 951 A1. Dabei ist die Verbindung zwischen dem topfförmigen Tragteil der Bremsscheibe und den radial außenliegenden Bremsringen mittels Verbindungsglieder in Form von Stiften, Bolzen, etc. hergestellt.

Die über den Umfang des Tragteiles verteilten Verbindungsglieder ragen dazu in Bohrungen der Reibringe ein, wobei die Bohrungen in die die Kühlkanäle voneinander trennenden Verbindungsstege eingebracht sind.

Aus der EP 1 091 137 A1 ist eine gattungsgemäße innenbelüftete Bremsscheibe für Scheibenbremsen, insbesondere in Kraftfahrzeugen bekannt, bei der zwei Reibringe durch zwischen sich im wesentlichen radial verlaufende Kühlkanäle bildende Stege miteinander verbunden sind. Die Reibringe sind über Hohlstifte mit dem Tragteil verbunden. Die Hohlstifte ragen dabei in die Kühlkanäle der Reibringe hinein. Die Hohlstifte bilden zusammen mit den korrespondierenden Kühlkanälen der Reibringe jeweils einen Strömungskanal beginnend vom Tragteil bis zum Außenumfang der Reibringe, durch den eine Kühlluftströmung strömt.

Aufgabe der Erfindung ist es, eine Bremsscheibe der gattungsgemäßen Art vorzuschlagen, die bei verbesserter Kühlung und Temperaturverteilung herstellungstechnisch günstig ausgebildet ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Gemäß dem kennzeichnenden Teil des neuen Patentanspruches 1 schließen sich an die Hohlstifte (22') radial nach innen ragende Strömungsleitelemente (34) an. Dadurch wird in verstärktem Maße Kühlluft durch die Reibringe der Bremsscheibe gefördert, wodurch die Kühlung der Bremsscheibe entsprechend verbessert wird.

Dazu ist es vorteilhaft, wenn der lichte Querschnitt der Kühlkanäle in den Hohlstiften zumindest im wesentlichen fortgesetzt ist. Dies sichert eine unbehinderte Durchströmung der Kühlkanäle von radial innerhalb des Tragteiles bis zum Außenumfang der Bremsringe.

In herstellungstechnisch günstiger Weise können dabei die Kühlkanäle kreissymmetrisch sein, wobei deren Durchmesser gleich dem Innendurchmesser der Hohlstifte ist.

Die Befestigung der Reibringe an den Hohlstiften kann stoffschlüssig (Schweißen oder Löten) oder reibschlüssig erfolgen. Bevorzugt wird jedoch vorgeschlagen, die Hohlstifte beim Gießen der zum Beispiel aus Grauguss hergestellten Reibringe im Verbundgussverfahren mit einzugießen.

Auch die Verbindung zwischen der Umfangswand des topfförmigen Tragteils und den Hohlstiften könnte stoffschlüssig durch Schweißen oder Löten durchgeführt werden; als herstellungstechnisch besonders günstig hat sich jedoch eine formschlüssige Verbindung durch Stauchen oder Umbördeln der Hohlstifte ergeben.

Desweiteren wird eine besonders günstige und robuste Konstruktion der Bremsscheibe erzielt, indem in zum Teil bekannter Weise die Reibringe aus Grauguss, die Hohlstifte aus Edelstahl und das Tragteil aus Edelstahl oder einer Aluminiumlegierung gefertigt und wie vorbeschrieben miteinander verbunden sind.

Fertigungstechnisch besonders einfach können die Strömungsleitelemente unmittelbar in Form von Strömungsleitschaufeln an die Hohlstifte angeformt sein.

Zwei Ausführungsbeispiele der Erfindung sind im Folgenden mit weiteren Einzelheiten näher beschrieben.

Die anliegende schematische Zeichnung zeigt in
Fig. 1 einen teilweisen Längsschnitt durch eine Bremsscheibe für eine Scheibenbremse in Kraftfahrzeugen mit einer durch Hohlstifte bewirkten Verbindung zwischen den radial äußeren Reibringen und dem radial inneren, topfförmigen Tragteil; und
Fig. 2 einen teilweisen Querschnitt gemäß Linie II - II der Fig. 1 durch die Bremsscheibe, wobei an die Hohlstifte Strömungsleitelemente angeformt sind.

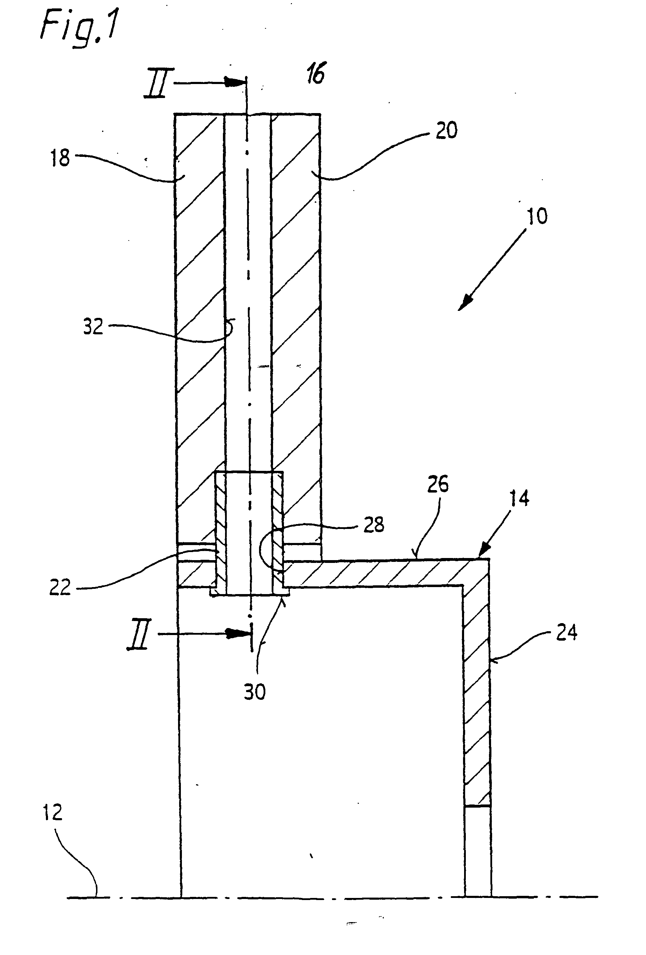

Die nur oberhalb ihrer Mittelachse 12 dargestellte innenbelüftete Bremsscheibe 10 für Scheibenbremsen in Kraftfahrzeugen setzt sich gemäß Figur 1 im wesentlichen zusammen aus einem topfförmigen Tragteil 14, zwei durch Verbindungsstege 16 zu einer Einheit verbundenen Reibringen 18, 20 und die Reibringe 18, 20 mit dem Tragteil 14 verbindenden Hohlstiften 22.

Das rotationssymmetrische Tragteil 14 aus Edelstahl weist einen Flanschabschnitt 24 und einen Mantelabschnitt 26 auf.

In den Mantelabschnitt 26 sind gleichmäßig über dessen Umfang verteilte Bohrungen 28 eingebracht, in die die Hohlstifte 22 eingesetzt und formschlüssig durch Stauchen und Umbördeln bei 30 befestigt sind.

Die Hohlstifte 22 ebenfalls aus Edelstahl und kreisringförmigen Querschnitts ragen in korrespondierende Kühlkanäle 32 ein, die in einer Flucht radial nach außen verlaufend zwischen den Stegen 16 ausgebildet sind. Dabei ist der Durchmesser der zylindrischen Kühlkanäle 32 gleich den Innendurchmessern der Hohlstifte 22, so dass im Querschnitt gleichförmige Kühlkanäle beginnend vom Mantelabschnitt 26 des Tragteiles 14 bis zum Außenumfang der Reibringe 18, 20 ausgebildet sind.

Bei der Fertigung der Bremsscheibe 10 wird das Tragteil 14 mit den daran befestigten Hohlstiften 22 in eine Gießform (nicht dargestellt) eingelegt und es werden in an sich bekannter Weise die Bremsringe 18, 20 mit den Verbindungsstegen 16 aus einer Graugusslegierung gegossen, wobei die Hohlstifte 22 entsprechend umgossen werden. Die Gießform (Kerne) ist dabei so ausgebildet, dass nach dem Entfernen der Kerne die Kühlkanäle 32 und die Hohlstifte 22 frei durchgängig sind.

Die beschriebene Konstruktion hat den Vorteil einer gleichmäßigen Materialverteilung der Bremsringe 18, 20 und der Stege 16 im Bereich der Hohlstifte 22. Daraus resultiert eine gleichmäßige Wärmeverteilung und -ableitung. Ferner ist eine verbesserte Kühlung gegeben, in die auch das Tragteil 14 und die Hohlstifte 22 unmittelbar mit einbezogen sind, da die Kühlluft von innerhalb des Tragteiles 14 radial nach außen durch die Hohlstifte 22 hindurch strömt und die Wärmeenergie entsprechend abführt.

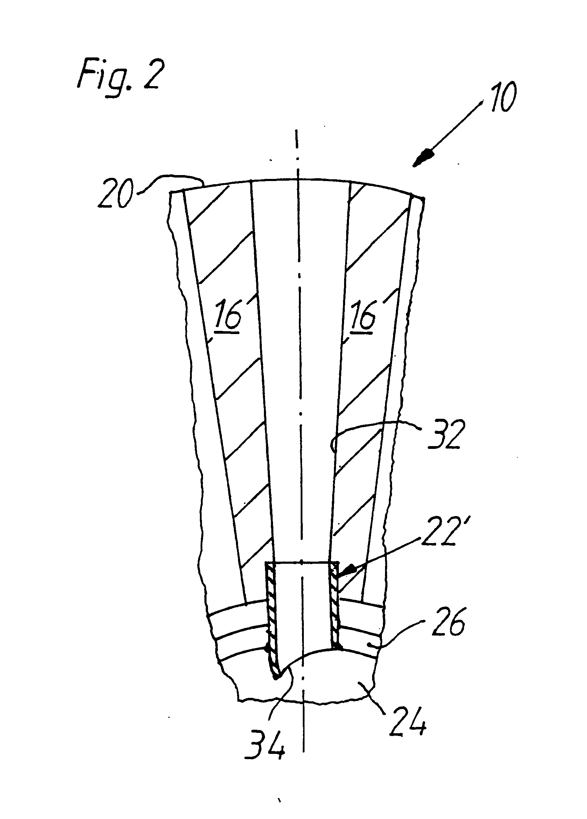

Die Figur 2 zeigt abschnittsweise die Bremsscheibe 10 mit der Abwandlung, dass an die Hohlstifte 22' radial nach innen ragende Strömungsleitelemente bzw. entsprechend angeformte Strömungsleitschaufeln 34 angeformt sind.

Diese Strömungsleitschaufeln 34 überragen wie ersichtlich den Mantelabschnitt 26 des Tragteils 14 und sind entsprechend der Drehrichtung der Bremsscheibe strömungsdynamisch so geformt, dass sie verstärkt Kühlluft von innerhalb des Mantelabschnittes 26 radial nach außen durch die Kühlkanäle 32 fördern.

Die Erfindung ist nicht auf das beschriebene Ausführungsbeispiel beschränkt.

So können die Hohlstifte 22 auch stoffschlüssig durch Schweißen oder Löten mit dem Tragteil 14 und/oder mit den Bremsringen 18, 20 und den Verbindungsstegen 16 verbunden sein.

Alternativ können die Hohlstifte 22 unmittelbar aus dem Mantelabschnitt 26 des Tragteiles 14 herausgeformt beziehungsweise durchgezogen sein (natürlich nicht in der im Ausführungsbeispiel dargestellten Länge). Der Querschnitt der Kühlkanäle 32 und der entsprechend angepasste lichte Querschnitt der Hohlstifte 22 könnte auch unsymmetrisch, zum Beispiel oval oder rechteckförmig, ausgebildet sein oder es kann der kreissymmetrische Querschnitt der Hohlstifte 22 in radial nach außen sich erweiternde, z. B. rechteckförmige Kühlkanäle 32 übergehen.

Schließlich könnte das Tragteil 14 auch aus einer Aluminiumlegierung gefertigt sein; die Reibringe 18, 20 mit den Verbindungsstegen 16 könnten auch aus Keramik oder Kohlenstoff hergestellt sein.

## Patentansprüche

1. Innenbelüftete Bremsscheibe für Scheibenbremsen, insbesondere in Kraftfahrzeugen, mit zwei Reibringen (18, 20), die durch zwischen sich im wesentlichen radial verlaufende Kühlkanäle (32) bildende Stege (16) miteinander verbunden sind, mit einem topfförmigen Tragteil (14) und mit stiftförmigen Verbindungselementen (22'), die das Tragteil (14) mit den Reibringen (18, 20) fest verbinden, wobei die Verbindungselemente Hohlstifte (22) sind, die in zumindest einige der Kühlkanäle (32) derart einragen, dass die Kühlkanäle (32) durchgehend vom Tragteil (14) zu den Reibringen (18, 20) verlaufen, **dadurch gekennzeichnet, dass** an die Hohlstifte (22') radial nach innen ragende Strömungsleitelemente (34) anschließen.

2. Bremsscheibe nach Anspruch 1, **dadurch gekennzeichnet, dass** der lichte Querschnitt der Kühlkanäle (32) in den Hohlstiften (22') zumindest im Wesentlichen fortgesetzt ist.

3. Bremsscheibe nach den Ansprüchen 1 und 2, **dadurch gekennzeichnet, dass** die Kühlkanäle (32) kreissymmetrisch sind und dass deren Durchmesser gleich dem Innendurchmesser der Hohlstifte (22') ist.

4. Bremsscheibe nach den Ansprüchen 1 bis 3, **dadurch gekennzeichnet, dass** die Reibringe (18, 20) mit den Verbindungsstegen (16) im Gießverfahren hergestellt sind und dass die mit dem Tragteil (14) verbundenen Hohlstifte (22') in die Reibringe (18, 20) und die Verbindungsstege (16) eingegossen sind.

5. Bremsscheibe nach einem oder mehreren der Ansprüche 1 bis 4, **dadurch gekennzeichnet, dass** die Hohlstifte (22') aus Edelstahl gefertigt sind.

6. Bremsscheibe nach einem oder mehreren der Ansprüche 1 bis 5, **dadurch gekennzeichnet, dass** die Hohlstifte (22') mit dem Mantelabschnitt (26) des Tragteils (14) formschlüssig durch Stauchen und/oder Umbördeln (30) fest verbunden sind.

7. Bremsscheibe nach einem oder mehreren der Ansprüche 1 bis 5, **dadurch gekennzeichnet, dass** die Reibringe (18, 20) mit den Verbindungsstegen (16) aus einer Graugusslegierung, die Hohlstifte (22') aus Edelstahl und das Tragteil (14) aus Edelstahl oder einer Aluminiumlegierung bestehen.

8. Bremsscheibe nach einem der vorhergehenden Ansprüche, **dadurch gekennzeichnet, dass** die Strömungsleitelemente (34) an die Hohlstifte (22') angeformt sind.

9. Bremsscheibe nach einem der vorhergehenden Ansprüche, **dadurch gekennzeichnet, dass** schräg zur Längsmittelachse auslaufende Abschnitte (34) der Hohlstifte (22') nach Art von Strömungsleitschaufeln gestaltet sind.

## Claims

1. Inside-vented brake disc for disc brakes, more particularly in motor vehicles, having two friction rings (18, 20) which are joined to one another by crosspieces (16) which between themselves form substantially radial cooling ducts (32), and also having a cup-shaped supporting member (14) and peg-shaped connecting elements (22') which permanently join the supporting member (14) to the friction rings (18, 20), the connecting elements being hollow pins (22') which project into at least some of the cooling ducts (32) in such a manner that the cooling ducts (32) extend continuously from the supporting member (14) to the friction rings (18, 20), **characterised in that** contiguous with the hollow pins (22') are radially inwardly projecting flow conducting elements (34).

2. Brake disc according to claim 1, **characterised in that** the clearance between the cooling ducts (32) is continued at least substantially in the hollow pins (22').

3. Brake disc according to claims 1 and 2, **characterised in that** the cooling ducts (32) are circular and that the diameter thereof is the same as the internal diameter of the hollow pins (22').

4. Brake disc according to claims 1 to 3, **characterised in that** the friction rings (18, 20) are produced with the connecting lands (16) by the casting process and that the hollow pins (22') joined to the supporting member (14) are cast integrally with the friction rings (18, 20) and the connecting lands (16).

5. Brake disc according to one or more of claims 1 to 4, **characterised in that** the hollow pins (22') are made from stainless steel.

6. Brake disc according to one or more of claims 1 to 5, **characterised in that** the hollow pins (22') are positively connected in a permanent manner to the casing section (26) of the supporting member (14) by upsetting and/or flanging (30).

7. Brake disc according to one or more of claims 1 to 5, **characterised in that** the friction rings (18, 20) with the connecting lands (16) are made of a grey cast iron alloy, the hollow pins (22') are made of stainless steel, and the supporting member (14) is made of stainless steel or of an alloy of aluminium.

8. Brake disc according to any one of the preceding claims, **characterised in that** the flow conducting elements (34) are formed onto the hollow pins (22').

9. Brake disc according to any one of the preceding claims, **characterised in that** portions (34) of the hollow pins (22') which extend to an angle relative to the longitudinal centre axis are shaped in the manner of flow conducting vanes.

## Revendications

1. Disque de frein à ventilation intérieure pour des freins à disques, en particulier dans des véhicules automobiles, avec deux anneaux de friction (18, 20) reliés ensemble par l'intermédiaire de nervures (16) formant entre elles des canaux de refroidissement (32) s'étendant essentiellement radialement, avec une pièce porteuse en forme de pot (14) et avec des éléments de raccordement en forme de tige (22') reliant solidairement la pièce porteuse (14) aux anneaux de friction (18, 20), les éléments de raccordement étant des tiges creuses (22') pénétrant au moins dans certains canaux de refroidissement (32), de sorte que les canaux de refroidissement (32) s'étendent depuis la pièce porteuse (14) jusqu'aux anneaux de friction (18, 20), **caractérisé en ce que** des éléments conducteurs d'écoulement (34) pénétrant radialement vers l'intérieur se raccordent aux tiges creuses (22').

2. Disque de frein selon la revendication 1, **caractérisé en ce que** la section transversale intérieure des canaux de refroidissement (32) est au moins essentiellement continue dans les tiges creuses (22').

3. Disque de frein selon les revendications 1 et 2, **caractérisé en ce que** les canaux de refroidissement (32) sont symétriques circulaires et que leur diamètre est identique au diamètre intérieur des tiges creuses (22').

4. Disque de frein selon les revendications 1 à 3, **caractérisé en ce que** les anneaux de friction (18, 20) sont fabriqués avec les nervures de raccordement (16) dans une méthode de coulée et que les tiges creuses (22') reliées à la pièce porteuse (14) sont coulées dans les anneaux de friction (18, 20) et les nervures de raccordement (16).

5. Disque de frein selon l'une ou plusieurs des revendications 1 à 4, **caractérisé en ce que** les tiges creuses (22') sont fabriquées dans un acier fin.

6. Disque de frein selon l'une ou plusieurs des revendications 1 à 5, **caractérisé en ce que** les tiges creuses (22') sont reliées solidairement avec la section d'enveloppe (26) de la pièce porteuse (14) par engagement positif par refoulement et / ou par rabattement (30).

7. Disque de frein selon l'une ou plusieurs des revendications 1 à 5, **caractérisé en ce que** les anneaux de friction (18, 20) et les nervures de raccordement (16) sont constitués d'un alliage en fonte grise, les tiges creuses (22') d'un acier fin et la pièce porteuse (14) d'un acier fin ou d'un alliage d'aluminium.

8. Disque de frein selon l'une des précédentes revendications, **caractérisé en ce que** les éléments conducteurs d'écoulement (34) sont formés sur les tiges creuses (22').

9. Disque de frein selon l'une des précédentes revendications, **caractérisé en ce que** les sections (34) des tiges creuses (22') s'étendant inclinées par rapport à l'axe central longitudinal sont conçues en fonction du type des aubes directrices d'écoulement.
